(19) **Europäisches Patentamt**
**European Patent Office**
**Office européen des brevets**

(11) **EP 1 569 963 B1**

(12) **EUROPÄISCHE PATENTSCHRIFT**

(45) Veröffentlichungstag und Bekanntmachung des Hinweises auf die Patenterteilung:
**30.09.2009 Patentblatt 2009/40**

(51) Int Cl.:
**C08B 3/06** *(2006.01)*   **C08H 5/04** *(2006.01)*
**B27K 3/36** *(2006.01)*

(21) Anmeldenummer: **03767674.9**

(22) Anmeldetag: **27.11.2003**

(86) Internationale Anmeldenummer:
**PCT/EP2003/013330**

(87) Internationale Veröffentlichungsnummer:
**WO 2004/048417 (10.06.2004 Gazette 2004/24)**

(54) **VERFAHREN ZUR HERSTELLUNG VON ACETYLIERTEM HOLZ**

METHOD FOR THE PRODUCTION OF ACETYLATED WOOD

PROCEDE POUR PRODUIRE DU BOIS ACETYLE

(84) Benannte Vertragsstaaten:
**AT BE BG CH CY CZ DE DK EE ES FI FR GB GR HU IE IT LI LU MC NL PT RO SE SI SK TR**

(30) Priorität: **28.11.2002 AT 17832002**

(43) Veröffentlichungstag der Anmeldung:
**07.09.2005 Patentblatt 2005/36**

(73) Patentinhaber: **Kompetenzzentrum Holz GmbH**
**4021 Linz (AT)**

(72) Erfinder:
• **HÖGLINGER, Otmar**
**A-4960 Leonding (AT)**
• **RÄTZSCH, Manfred**
**A-4062 Wilhering/Thalheim (AT)**
• **BUCKA, Helmut**
**A-4622 Eggendorf (AT)**
• **TANCZOS, Ildiko**
**A-4451 Garsten (AT)**
• **STALLINGER, Stefan**
**A-4850 Timelkam (AT)**

(74) Vertreter: **Maikowski, Michael et al**
**Patentanwälte**
**Maikowski & Ninnemann**
**Kurfürstendamm 54-55**
**10707 Berlin (DE)**

(56) Entgegenhaltungen:
WO-A-01/98414      DE-A- 3 227 267
US-A- 3 894 839

**Beschreibung**

Die Erfindung betrifft ein Verfahren zur Herstellung von acetyliertem Holz mit einem Gehalt an Acetylgruppen von 3 bis 30 Masse%, bezogen auf die Holztrockensubstanz.

Die Herstellung von acetyliertem Holz durch Umsetzung von Holz mit Essigsäureanhydrid bei Temperaturen von 100 bis 130°C ist bekannt (GB963929A1; US5525721A; US5431868A). Von Nachteil bei der Acetylierung von Holz mit Essigsäureanhydrid ist der Verlust des natürlichen Glanzes und eine Verfärbung des Holzes (US3094431A), sowie die als Nebenprodukt gebildete Essigsäure, die durch aufwendige Extraktion aus dem Holz entfernt werden muss, wobei verbleibende geringe Anteile zu einer Geruchsbelästigung sowie zu einem Abbau der Cellulosekomponente des Holzes führen.

Bekannt ist weiterhin die Acetylierung von Holz mit Keten, bei der keine störenden Anteile an Essigsäure als Nebenprodukt gebildet werden (Rowell, R., "The Chemistry of Solid Wood", Advances in Chemistry Series, Vol. 207, S. 175). Nachteilig bei diesem Verfahren sind jedoch die langen Reaktionszeiten und geringen Acetylierungsausbeuten.

Ebenfalls bekannt ist die Acetylierung von Holz mit Acetylchlorid. Hier bilden die geringen Ausbeuten und die als Nebenprodukt gebildete Salzsäure den Verfahrensnachteil (Rowell, R., "The Chemistry of Solid Wood", Advances in Chemistry Series, Vol. 207, S. 175).

Ziel der Erfindung ist ein Verfahren zur Acetylierung von Holz, das die Nachteile des Standes der Technik vermeidet.

Die erfindungsgemäße Aufgabe wurde durch ein Verfahren zur Herstellung von acetyliertem Holz mit einem Gehalt an Acetylgruppen von 3 bis 30 Masse%, bezogen auf die Holztrockensubstanz, gelöst, bei dem erfindungsgemäß durch spanende Bearbeitung hergestellte Festholzerzeugnisse, Holzpartikel oder Holzfinalerzeugnisse einer Restfeuchte von 2 bis 15 Masse% bei Reaktionstemperaturen von 50 bis 125°C und Verweilzeiten von 0,2 bis 6 Std. mit Isopropenylacetat in Gegenwart von 0,02 bis 2 Masse%, bezogen auf das eingesetzte Isopropenylacetat, saurer Katalysatoren umgesetzt werden, und bei Temperaturen von 80 bis 125°C/ 0,1 bis 1 bar bei Verweilzeiten von 0,2 bis 8 Std. getrocknet werden, wobei die Umsetzung mit Isopropenylacetat in flüssiger Phase oder in Gasphase durchgeführt werden kann.

Die bei dem erfindungsgemäßen Verfahren eingesetzten Holzerzeugnisse sind und durch spanende Bearbeitung hergestellte Festholzerzeugnisse, insbesondere in Form von Furnieren, Brettern, Bohlen, Kanthölzern, Balken oder Profilen, Holzpartikel, insbesondere in Form von Holzmehl, Holzfasern oder Holzspänen, oder Holzfinalerzeugnisse.

Die Holzerzeugnisse können aus Laub- oder Nadelhölzern bestehen. Bei Einsatz von Holzpartikeln können die bei der Holzverarbeitung anfallenden Holzabfälle in Form von Holzmehl, Holzfasern und Holzspänen eingesetzt werden. Möglich ist ebenfalls der Einsatz von Gemischen aus Holzabfällen.

Von Vorteil ist es, bei der Acetylierung Holzerzeugnisse mit einer Restfeuchte unter 12 Masse% einzusetzen, günstig ist eine Restfeuchte im Bereich von 5 bis 12 Masse%. Niedrige Restfeuchten verzögern den Reaktandentransport in die Holzsubstanz.

Beispiele für saure Katalysatoren, die bei dem erfindungsgemäßen Verfahren eingesetzt werden können, sind Säuren wie Salzsäure, Schwefelsäure, Phosphorsäure, Borsäure, Chlorsulfonsäure, p-Toluolsulfonsäure oder Chlorwasserstoff, sowie Säurebildner wie Carbonsäureanhydride, Carbonsäurechloride, Chlorsilane, Phosphorpentoxid oder Schwefeldioxid, bei denen in Gegenwart von Wasser Säurebildung eintritt.

Um bei der Umsetzung in flüssiger Phase den Wassereintrag in das Reaktionssystem möglichst niedrig zu halten, ist es günstig, die katalytischen Mengen an Säuren in hoher Konzentration einzusetzen. Konzentrierte Schwefelsäure als Katalysator hat den Vorteil eines geringen Wassereintrags in das Reaktionssystem, aber den Nachteil der Verfärbung des Holzes auf Grund der Oxidationswirkung.

Bevorzugte Säuren als saure Katalysatoren sind Chlorwasserstoff, Phosphorsäure, Borsäure, Chlorsulfonsäure und/oder p-Toluolsulfonsäure.

Bevorzugte Säurebildner als saure Katalysatoren sind Säurebildner vom Typ Carbonsäureanhydride, besonders bevorzugt Maleinsäureanhydrid, Acetanhydrid, Phthalsäureanhydrid und/oder Pyromellithsäuredianhydrid, Carbonsäurechloride, besonders bevorzugt Benzoylchlorid, Acryloylchlorid und/oder Acetylchlorid, und/oder Chlorsilane.

Beispiele für geeignete Chlorsilane sind Trichlorsilan, Siliciumtetrachlorid, Dimethylhydrogenchlorsilan oder Methylhydrogendichlorsilan.

Bevorzugt wird Holz mit Isopropenylacetat in flüssiger Phase bei einem Masseverhältnis Isopropenylacetab Holz von 0,5 : 1 bis 15 : 1 und einer Reaktionstemperatur von 45 bis 95°C umgesetzt.

Bevorzugte Reaktionsbedingungen bei der Umsetzung von Holz mit Isopropenylacetat in flüssiger Phase sind Reaktionstemperaturen von 85 bis 95°C, Verweilzeiten von 1,5 bis 3 Stunden, und der Einsatz von 0,1 bis 0,3 mol konzentrierte Salzsäure pro Liter eingesetztes Isopropenylacetat als Katalysator, wobei die Umsetzung unter Abdestillation des gebildeten Acetons durchgeführt wird.

Eine Erhöhung des Einsatzes an katalytischer Menge konzentrierter Salzsäure von 0,3 mol/l auf 0,5 mol/l eingesetztes Isopropenylacetat führt auf Grund des höheren Wassereintrages nur zu einer unwesentlichen Erhöhung der Reaktionsgeschwindigkeit. Katalytische Mengen an konzentrierter Salzsäure unter 0,05 mol/l eingesetztes Isopro-

**EP 1 569 963 B1**

penylacetat zeigen nur eine sehr geringe katalytische Wirksamkeit.

Für die Acetylierung von Holzpartikeln in Form von Holzmehl, Holzfasern oder Holzspänen mit Isopropenylacetat in flüssiger Phase sind Rührreaktoren geeignet. Es ist dabei von Vorteil, das bei der Umsetzung gebildete Aceton kontinuierlich aus dem Rührreaktor abzudestillieren, um hohe Ausbeuten zu erzielen. Die Aufarbeitung des Reaktionsgemischs kann durch Abtrennung der partiell acetylierten Holzpartikel in Filterpressen oder Schälzentrifugen, gegebenenfalls Aufschlämmen in Wasser oder Wasser-Aceton-Gemischen und Filtration, und nachfolgende Trocknung in Band-, Trommel- oder Zerstäubungstrocknungsanlagen bei 100 bis 125°C erfolgen.

Die Acetylierung von Festholzerzeugnissen oder Holzfinalartikeln mit Isopropenylacetat in flüssiger Phase kann in Trogreaktoren, Reaktoren mit Taumeleinrichtung oder Rotationsbehältern erfolgen, günstig ist auch hier eine kontinuierliche Abdestillation des gebildeten Acetons. Die Trocknung der partiell acetylierten Festholzerzeugnisse oder Holzfinalartikel kann in Vacuumtrocknungsanlagen oder Trockentunneln bei 80 bis 125°C erfolgen.

Das bei der Umsetzung in flüssiger Phase nichtumgesetzte Isopropenylacetat kann nach Fraktionierung unter Abtrennung der Verunreinigungen an Aceton, Wasser und Essigsäure in den Prozess rückgeführt werden.

Eine weitere bevorzugte Variante des erfindungsgemäßen Verfahrens bildet die Umsetzung von Holzerzeugnissen mit Isopropenylacetat in der Gasphase bei Reaktionstemperaturen von 100 bis 120°C und Verweilzeiten von 0,3 bis 3 Stunden drucklos unter Einsatz von gasförmigem Isopropenylacetat und Chlorwasserstoffgas. Diese Variante ist besonders für die Acetylierung von Holzspänen, Holzfasern und Holzmehl geeignet, da die Acetylierung in Wirbelschichtreaktoren oder Schneckenförderern unter kontinuierlichem Austrag der acetylierten Holzpartikel durchgeführt werden kann. Nach Kondensation des Gasgemischs und Fraktionierung kann Isopropenylacetat in den Prozess rückgeführt werden.

Als Verfahrensvariante wird ebenfalls die Umsetzung von Holzerzeugnissen mit Isopropenylacetat im Autoklaven bei Reaktionstemperaturen von 90 bis 120°C und Verweilzeiten von 0,2 bis 2 Stunden bei 1,1 bis 35 bar unter Einsatz von wasserfreiem Chlorwasserstoff als Katalysator bevorzugt. Als Reaktoren sind rotierende Druckbehälter oder Autoklaven mit Taumeleinrichtung geeignet. Der Vorteil einer Druckbeaufschlagung mit Inertgasen wie Stickstoff oder Argon besteht in der Beschleunigung der Diffusion von Isopropenylacetat und Chlorwasserstoff in die kompakten Festholzerzeugnisse während der Acetylierung.

Sowohl bei Umsetzung in Gasphase als auch bei der Umsetzung im Autoklaven besteht der Vorteil des eingesetzten wasserfreien Chlorwasserstoffs als Katalysator darin, dass ein Eintrag von Wasser in das Reaktionssystem vermieden und eine Hydrolyse von geringen Anteilen des Isopropenylacetats ausgeschlossen wird.

Das nach dem erfindungsgemäßen Verfahren hergestellte acetylierte Holz wird bevorzugt für Holzerzeugnisse mit hohen Anforderungen an Dimensionsstabilität und natürlicher Dauerhaftigkeit, insbesondere für Außentüren, Fassadenbeplankungen, Vertäfelungen und Feuchtraumanwendungen, eingesetzt.

Faserplatten, die aus acetylierten Holzspänen hergestellt werden, zeichnen sich gegenüber üblichen Faserplatten durch eine verbesserte Festigkeit und natürliche Dauerhaftigkeit aus.

Die Erfindung wird durch nachfolgende Beispiele erläutert:

Titrimetrische Bestimmung des Acetylierungsgrades

Etwa 0,5 g getrocknetes acetyliertes Holzmehl werden auf 0,1 mg genau eingewogen und in einen 250 ml Erlenmeyerkolben übergeführt. Nach Zugabe von 10 ml 75% Ethanol wird 35 min auf 50°C temperiert. Danach pipettiert man 25 ml 0,5 mol/l Natronlauge dazu und temperiert nochmals 30 min auf 50°C. Nach Zugabe von 25 ml 0,5 mol/l Salzsäurelösung wird mit Natronlauge 0,5 mol/l gegen Phenolphthalein zurücktitriert. Durch die Natronlauge werden die Estergruppen vollständig hydrolysiert, die Base selbst dabei verbraucht. Aus dem Verbrauch resultiert die Anzahl an Acetylgruppen pro g Holzmehl. Zur Normierung wird mit unbehandeltem Holzmehl ein Blindwert ermittelt, der in die Berechnung einbezogen wird :

$$B = \frac{\frac{N.a}{1000} - BW.EW}{EW}$$

B    Stoffmenge der Acetylgruppen in der Probe (mol/g)

N    Konzentration der Natronlauge (mol/l)

a    Titrationsvolumen (ml)

EW    Einwaage (g)

BW    Blindwert

Gravimetrische Bestimmung des Acetylierungsgrades

Holzspäne oder Festholzprüfkörper werden im Soxhlet 4 Std. mit Aceton extrahiert und 3 Tage im Vacuumtrockenschrank bei 105°C getrocknet. Die Gewichtszunahme wird durch einen Blindwert korrigiert, der sich aus der Extraktion von nicht behandeltem Holz mit Aceton und Isopropenylacetat ergibt. Die Gewichtszunahme wird auf die trockene unbehandelte Holzsubstanz bezogen.

Beispiele 1 -13 Acetylierung von Holzpulver mit Isopropenylacetat in flüssiger Phase mit Salzsäure als Katalysator

In einen durch ein Ölbad beheizten 5 l - Rührreaktor mit absteigendem Kühler und Kondensatvorlage werden 289 g Holzmehl (Restfeuchte 7 Masse%, mittlerer Partikeldurchmesser 100 $\mu$m, Zusammensetzung 90 Masse% Fichte und 10 Masse% Tanne, pH-Wert 5,5 bei 100g/l in $H_2O$ und 20°C) und 3554 g Isopropenylacetat ($d^{20}$ = 0,920 g/cm$^3$, Kp 95-97°C), das 0,16 bis 0,32 mol konzentrierte Salzsäure (31,5 %) / l Isopropenylacetat enthält, dosiert, auf Reaktionstemperatur erwärmt, 0,5 bis 6 Std. unter kontinuierlicher Abdestillation des gebildeten Acetons auf Reaktionstemperatur belassen, das Gemisch nach Abkühlung filtriert, das acetylierte Holzpulver in 3 l eines Aceton-Wasser-Gemischs dispergiert, filtriert, und im Vacuumtrockenschrank bei 105°C 6 Std. getrocknet. Reaktionsbedingungen und Acetylierungsgrad sind in Tabelle 1 zusammengefasst.

Beispiel 14 Acetylierung von Holzpulver mit Isopropenylacetat in flüssiger Phase mit Maleinsäureanhydrid als Katalysator

In einen durch ein Ölbad beheizten 5 l - Rührreaktor mit absteigendem Kühler und Kondensatvorlage werden 289 g Holzmehl (Restfeuchte 7 Masse%, mittlerer Partikeldurchmesser 100 $\mu$m, Zusammensetzung 90 Masse% Fichte und 10 Masse% Tanne, pH-Wert 5,5 bei 100g/l in $H_2O$ und 20°C) und 3554 g Isopropenylacetat ($d^{20}$ = 0,920 g/cm$^3$, Kp 95-97°C), das 0,4 mol Maleinsäureanhydrid / l Isopropenylacetat gelöst enthält, dosiert, auf 90°C erwärmt, 5 Std. unter kontinuierlicher Abdestillation des gebildeten Acetons auf 90°C belassen, das Gemisch nach Abkühlung filtriert, das acetylierte Holzpulver in 3,5 l eines Aceton-Wasser-Gemischs dispergiert, filtriert, und im Vacuumtrockenschrank bei 105°C 6,5 Std. getrocknet. Die Gewichtszunahme durch Acetylierung beträgt 14,9 Masse%.

Beispiel 15 Acetylierung von Holzspänen mit Isopropenylacetat in flüssiger Phase

In einen durch ein Ölbad beheizten 5 l - Rührreaktor mit absteigendem Kühler und Kondensatvorlage werden 94 g Holzspäne (Hobelspäne aus Fichtenholz, mittlere Abmaße 1 x 2 x 0,05 cm) und 3554 g Isopropenylacetat ($d^{20}$ = 0,920 g/cm$^3$, Kp 95-97°C), das 0,31 mol konzentrierte Salzsäure (31,5 %) / l Isopropenylacetat enthält, dosiert, auf 85°C erwärmt, 3 Std. unter kontinuierlicher Abdestillation des gebildeten Acetons auf Reaktionstemperatur belassen, das Gemisch nach Abkühlung filtriert, die acetylierten Holzspäne in 3 l eines Aceton-Wasser-Gemischs dispergiert, filtriert, und im Vacuumtrockenschrank bei 105°C 6 Std. getrocknet. Die Gewichtszunahme durch Acetylierung beträgt 16,5 Masse%.

Beispiele 16 - 19 Acetylierung von Festholz mit Isopropenylacetat in flüssiger Phase mit Salzsäure als Katalysator

In einen durch ein Ölbad beheizten 5 l - Rührreaktor mit absteigendem Kühler und Kondensatvorlage werden 295 g Fichtenholzprüfkörper (halbierte Holzwürfel, Abmaße 2 x 2 x 1 cm, Restfeuchte 10 Masse%) und 3540 g Isopropenylacetat ($d^{20}$ = 0,920 g/cm$^3$, Kp 95-97°C), das 0,32 mol konzentrierte Salzsäure (31,5 %) / l Isopropenylacetat enthält, dosiert, auf Reaktionstemperatur erwärmt, 1 bis 6 Std. unter kontinuierlicher Abdestillation des gebildeten Acetons auf Reaktionstemperatur belassen, die acetylierten Holzprüfkörper abfiltriert und mit 3 l eines Aceton-Wasser-Gemischs gewaschen und im Vacuumtrockenschrank bei 115°C 6 Std. getrocknet. Reaktionsbedingungen und Acetylierungsgrad sind in Tabelle 2 zusammengefasst.

Beispiel 20 Acetylierung von Festholz mit Isopropenylacetat in flüssiger Phase mit p-Toluolsulfonsäure als Katalysator

In einen durch ein Ölbad beheizten 5 l - Rührreaktor mit absteigendem Kühler und Kondensatvorlage werden 280 g Fichtenholzprüfkörper (halbierte Holzwürfel, Abmaße 2 x 2 x 1 cm, Restfeuchte 10 Masse%) und 3540 g Isopropenylacetat ($d^{20}$ = 0,920 g/cm$^3$, Kp 95-97°C), das 0,22 mol p-Toluolsulfonsäure/ l Isopropenylacetat enthält, dosiert, auf 90°C erwärmt, 5 Std. unter kontinuierlicher Abdestillation des gebildeten Acetons auf Reaktionstemperatur belassen, die acetylierten Holzprüfkörper abfiltriert und mit 3,2 l eines Aceton-Wasser-Gemischs gewaschen und im Vacuumtrockenschrank bei 110°C 8 Std. getrocknet.
Die Gewichtszunahme durch Acetylierung beträgt 21,9 Masse%.

Beispiel 21 Acetylierung von Holzpulver im Schneckenförderer

In einen auf 115°C elektrisch beheizten Schneckenförderer aus Edelstahl (Ø 20 mm, I = 1450 mm) mit Dosierbandwaage, Gaseinleitungsstutzen und Puffergefäß mit Zellenradschleuse wird Holzmehl (Restfeuchte 7 Masse%, mittlerer Partikeldurchmesser 100 $\mu$m, Zusammensetzung 90 Masse% Fichte und 10 Masse% Tanne, pH-Wert 5,5 bei 100g/l in $H_2O$ und 20°C) mit 0,25 kg/h dosiert und durch den Gaseinleitungsstutzen auf 110°C vorgewärmtes gasförmiges Isopropenylacetat, das 0,15 mol Chlorwasserstoff / kg Isopropenylacetat enthält, mit 120 l/Std. dosiert. Das acetylierte Holzpulver wird aus dem Puffergefäß über eine Zellenradschleuse ausgetragen und auf einem Bandtrockner bei 115°C getrocknet. Das Gasgemisch wird nach dem Puffergefäß durch einen Kondensator geleitet, und Isopropenylacetat aus dem Kondensat durch fraktionierte Destillation abgetrennt und in den Prozess zurückgeführt.

Die Gewichtszunahme des Holzmehls durch Acetylierung beträgt 11,5 Masse%.

Beispiel 22 Acetylierung von Holzspänen im Rührautoklav

In einen durch ein Ölbad beheizten 5 l - Rührautoklav mit absteigendem Kühler und Kondensatvorlage werden 120 g Holzspäne (Hobelspäne aus Fichtenholz, mittlere Abmaße 1 x 2 x 0,05 cm) eingebracht. Nach Schließen des Autoklavs wird über ein Druckdosiergefäß 3200 g Isopropenylacetat ($d^{20}$ = 0,920 g/cm$^3$, Kp 95-97°C), das 0,28 mol Chlorwasserstoff / 1 Isopropenylacetat enthält, in den Autoklaven dosiert, auf 120°C erwärmt und 1,5 Std. unter kontinuierlicher Druckdestillation des gebildeten Acetons auf Reaktionstemperatur belassen. Nach Abkühlung auf 90°C wird der Autoklav entspannt, das Gemisch nach Abkühlung filtriert, die acetylierten Holzspäne in 3 l eines Aceton-Wasser-Gemischs dispergiert, filtriert, und im Vacuumtrockenschrank bei 115°C 6 Std. getrocknet.

Die Gewichtszunahme durch Acetylierung beträgt 17,5 Masse%.

Beispiel 23 Kontinuierliche Acetylierung von Fichtenholzfurnier mit Isopropenylacetat in flüssiger Phase mit Salzsäure als Katalysator

In einem temperierbaren geschlossenen beschichteten Imprägniertrog mit einem Volumen von 1800 1, Kreislaufführung für flüssige Medien, 8 Umlenkwalzenpaaren und 2 Walzenpaaren für den Einzug und den Austrag von Flächenbahnen, der mit 1350 1 Isopropenylacetat ($d^{20}$ = 0,920 g/cm$^3$, Kp 95-97°C), das 0,30 mol konzentrierte Salzsäure (31,5 %) / l Isopropenylacetat enthält, befüllt ist, wird eine Fichtenholzfumierbahn (Breite 600 mm, Dicke 2 mm) kontinuierlich bei einer Badtemperatur von 90°C und einer mittleren Verweilzeit von 20 min acetyliert und nach Verlassen des Imprägniertroges in einem Heiztunnel unter Heißluftbehandlung bei 110°C getrocknet.

Die Gewichtszunahme eines im Soxhlet 4 Std. mit Aceton extrahierten und 3 Tage im Vacuumtrockenschrank bei 105°C getrockneten Prüfstreifens beträgt 12,2 Masse%.

Beispiel 24 Acetylierung von Brettern im Taumelautoklav

In einen zylinderförmigen Taumelautoklav (h = 2,5 m, Ø 0,8 m) werden 200 kg Buchenholzbretter (Länge 2 m, Breite 120 mm, Dicke 25 mm, Restfeuchte 8 Masse%) eingebracht. Nach Schließen des Taumelautoklavs werden über ein Druckdosiergefäß 750 l Isopropenylacetat ($d^{20}$ = 0,920 g/cm$^3$, Kp 95-97°C), das 0,28 mol Chlorwasserstoff / l Isopropenylacetat enthält, in den Taumelautoklaven dosiert, auf 110°C erwärmt und 2,5 Std. unter kontinuierlicher Druckdestillation des gebildeten Acetons auf Reaktionstemperatur belassen. Nach Abkühlung auf 80°C wird der Autoklav entspannt, die flüssige Phase abgelassen, und die acetylierten Buchenholzbretter in einem Trockentunnel bei 120°C und einer Verweilzeit von 4 Std. getrocknet.

Die Gewichtszunahme eines im Soxhlet 4 Std. mit Aceton extrahierten und 3 Tage im Vacuumtrockenschrank bei 105°C getrockneten ausgeschnittenen Prüfkörpers beträgt 16,1 Masse%.

Tabelle 1 Beispiele 1 - 13 Acetylierung von Holzpulver mit Isopropenylacetat in flüssiger Phase

| Beisp. Nr. | HCl-Katalysator mol/l Isopr.acetat | Reaktionszeit (Std.) | T (°C) | Gew.Zunahme durch Acetylierung (Masse%) |
|---|---|---|---|---|
| 0 | 0 | 3 | 85 | 0,1 |
| 1 | 0,112 | 3 | 85 | 3,1 |
| 2 | 0,16 | 3 | 85 | 8,3 |
| 3 | 0,216 | 3 | 85 | 13,4 |
| 4 | 0,32 | 3 | 85 | 15,8 |
| 5 | 0,32 | 0,5 | 85 | 9 |
| 6 | 0,32 | 1 | 85 | 10,8 |

(fortgesetzt)

| Beisp. Nr. | HCI-Katalysator mol/l Isopr.acetat | Reaktionszeit (Std.) | T (°C) | Gew.Zunahme durch Acetylierung (Masse%) |
|---|---|---|---|---|
| 7 | 0,35 | 1,5 | 85 | 14,3 |
| 8 | 0,32 | 6,0 | 85 | 19,2 |
| 9 | 0, 32 | 3 | 50 | 4,1 |
| 10 | 0,32 | 3 | 60 | 8,2 |
| 11 | 0,32 | 3 | 75 | 14,4 |
| 12 | 0,32 | 3 | 85 | 15,8 |
| 13 | 0,32 | 3 | 95 | 16,1 |

Tabelle 2 Beispiele 16 - 19 Acetylierung von Holzprüfkörpem mit Isopropenylacetat in flüssiger Phase

| Beisp. Nr. | HCI-Katalysator mol/l Isopr.acetat | Reaktionszeit (Std.) | T (°C) | Gew.Zunahme durch Acetylierung (Masse%) |
|---|---|---|---|---|
| 0 | 0 | 3 | 85 | 0,1 |
| 16 | 0,32 | 3 | 85 | 23 |
| 17 | 0,32 | 6 | 85 | 23,9 |
| 18 | 0,32 | 1 | 85 | 17,3 |
| 19 | 0,32 | 2 | 85 | 22,7 |

**Patentansprüche**

1. Verfahren zur Herstellung von acetyliertem Holz mit einem Gehalt an Acetylgruppen von 3 bis 30 Masse%, bezogen auf die Holztrockensubstanz, **dadurch gekennzeichnet, dass** durch spanende Bearbeitung hergestellte Festholzerzeugnisse, Holzpartikel oder Holzfinalerzeugnisse mit einer Restfeuchte von 2 bis 15 Masse% bei Reaktionstemperaturen von 50 bis 125°C und Verweilzeiten von 0,2 bis 6 Std. mit Isopropenylacetat in Gegenwart von 0,02 bis 2 Masse%, bezogen auf das eingesetzte Isopropenylacetat, saurer Katalysatoren umgesetzt werden, und bei Temperaturen von 80 bis 125°C/ 0,1 bis 1 bar bei Verweilzeiten von 0,2 bis 8 Std. getrocknet werden, wobei die Umsetzung mit Isopropenylacetat in flüssiger Phase oder in Gasphase durchgeführt werden kann.

2. Verfahren nach Anspruch 1, **dadurch gekennzeichnet, dass** die durch spanende Bearbeitung hergestellten Festholzerzeugnisse in Form von Furnieren, Brettern, Bohlen, Kanthölzern, Balken oder Profilen, Holzpartikel, bevorzugt in Form von Holzmehl, Holzfasern oder Holzspänen, oder Holzfinalerzeugnisse, eingesetzt werden.

3. Verfahren nach Anspruch 1 oder 2, **dadurch gekennzeichnet, dass** als saure Katalysatoren Säuren, vom Typ Chlorwasserstoff, Phosphorsäure, Borsäure, Chlorsulfonsäure und/oder p-Toluolsulfonsäure eingesetzt werden.

4. Verfahren nach Anspruch 1 oder 2, **dadurch gekennzeichnet, dass** als saure Katalysatoren Säurebildner vom Typ Carbonsäureanhydride, Carbonsäurechloride, und/oder Chlorsilane eingesetzt werden.

5. Verfahren nach Anspruch 4, **dadurch gekennzeichnet, dass** als Carbonsäureanhydride Maleinsäureanhydrid, Acetanhydrid, Phthalsäureanhydrid und/oder Pyromellithsäuredianhydrid, und als Carbonsäurechloride Benzoylchlorid, Acryloylchlorid und/oder Acetylchlorid eingesetzt werden.

6. Verfahren nach einem oder mehreren der Ansprüche 1 bis 5, **dadurch gekennzeichnet, dass** die Umsetzung mit Isopropenylacetat in flüssiger Phase bei einem Masseverhältnis Isopropenylacetat/Holz von 0,5 : 1 bis 15 : 1 und einer Reaktionstemperatur von 45 bis 95°C durchgeführt wird.

7. Verfahren nach Anspruch 6, **dadurch gekennzeichnet, dass** die Umsetzung mit Isopropenylacetat in flüssiger Phase bei Reaktionstemperaturen von 85 bis 95°C, Verweilzeiten von 1,5 bis 3 Stunden, und unter Einsatz von 0,1 bis 0,3 mol konzentrierte Salzsäure pro Liter eingesetztes Isopropenylacetat als Katalysator, wobei die Umsetzung unter Abdestillation des gebildeten Acetons durchgeführt wird.

**8.** Verfahren nach einem oder mehreren der Ansprüche 1 bis 3, **dadurch gekennzeichnet, dass** die Umsetzung von Holzerzeugnissen mit Isopropenylacetat in der Gasphase bei Reaktionstemperaturen von 100 bis 120°C und Verweilzeiten von 0,3 bis 3 Stunden drucklos unter Einsatz von gasförmigem Isopropenylacetat und Chlorwasserstoffgas durchgeführt wird.

**9.** Verfahren nach einem oder mehreren der Ansprüche 1 bis 3, **dadurch gekennzeichnet, dass** die Umsetzung von Holzerzeugnissen mit Isopropenylacetat im Autoklaven bei Reaktionstemperaturen von 90 bis 120°C und Verweilzeiten von 0,2 bis 2 Stunden bei 1,1 bis 35 bar unter Einsatz von wasserfreiem Chlorwasserstoff als Katalysator durchgeführt wird.

**Claims**

**1.** Process for producing acetylated wood having an acetyl group content of from 3 to 30% by mass, based on dry wood, **characterized in that** solid wood products produced by material-removing machining, wood particles or wooden end products having a residual moisture content of from 2 to 15% by mass are reacted at reaction temperatures of from 50 to 125°C and residence times of from 0.2 to 6 hours with isopropenyl acetate in the presence of from 0.02 to 2% by mass, based on the isopropenyl acetate used, of acid catalysts, and are dried at temperatures of from 80 to 125°C/0.1 to 1 bar at residence times of from 0.2 to 8 hours, with the reaction with isopropenyl acetate being able to be carried out in the liquid phase or in the gas phase.

**2.** Process according to claim 1, **characterized in that** the solid wood products produced by material-removing machining are used in the form of veneers, boards, planks, squared timber, beams or profiles, wood particles, preferably in the form of wood flour, wood fibers or wood shavings, or wooden end products.

**3.** Process according to claim 1 or 2, **characterized in that** acid catalysts used are acids such as hydrogen chloride, phosphoric acid, boric acid, chlorosulfonic acid and/or p-toluenesulfonic acid.

**4.** Process according to claim 1 or 2, **characterized in that** acid catalysts used are acid formers such as carboxylic anhydrides, carboxylic acid chlorides, and/or chlorosilanes.

**5.** Process according to claim 4, **characterized in that** carboxylic anhydrides used are maleic anhydride, acetic anhydride, phthalic anhydride and/or pyromellitic dianhydride, and carboxylic acid chlorides used are benzoyl chloride, acryloyl chloride and/or acetyl chloride.

**6.** Process according to one or more of claims 1 to 5, **characterized in that** the reaction with isopropenyl acetate is carried out in the liquid phase at a mass ratio of isopropenyl acetate/wood of from 0.5:1 to 15:1 and a reaction temperature of from 45 to 95°C.

**7.** Process according to claim 6, **characterized in that** the reaction with isopropenyl acetate is carried out in the liquid phase at reaction temperatures of from 85 to 95°C, residence times of from 1.5 to 3 hours and using from 0.1 to 0.3 mol of concentrated hydrochloric acid as catalyst per liter of isopropenyl acetate used, with the acetone formed being distilled off during the reaction.

**8.** Process according to one or more of claims 1 to 3, **characterized in that** the reaction of wood products with isopropenyl acetate is carried out in the gas phase at reaction temperatures of from 100 to 120°C and residence times of from 0.3 to 3 hours under atmospheric pressure using gaseous isopropenyl acetate and hydrogen chloride gas.

**9.** Process according to one or more of claims 1 to 3, **characterized in that** the reaction of wood products with isopropenyl acetate is carried out in autoclaves at reaction temperatures of from 90 to 120°C and residence times of from 0.2 to 2 hours at from 1.1 to 35 bar using anhydrous hydrogen chloride as catalyst.

**Revendications**

**1.** Procédé de production de bois acétylé ayant une teneur en groupes acétyle de 3 à 30 % en masse par rapport à la substance sèche du bois, **caractérisé en ce que** des produits en bois solide, produits par traitement par enlèvement de copeaux, des particules de bois ou des produits finaux en bois ayant une humidité résiduelle de 2 à 15 % en masse sont mis à réagir à des températures de réaction de 50 à 125°C et des temps de séjour de 0,2 à 6 heures avec de l'acétate d'isopropényle en présence de 0,02 à 2 % en masse, par rapport à l'acétate d'isopropényle utilisé, de catalyseurs acides, et sont séchés à des températures de 80 à 125°C/0,1 à 1 bar avec des temps de séjour de 0,2 à 8 heures, où la réaction avec l'acétate d'isopropényle peut être conduite en phase liquide ou en phase gazeuse.

2. Procédé selon la revendication 1 **caractérisé en ce que** les produits en bois solide produits par traitement par enlèvement de copeaux sont utilisés sous forme de feuilles de placage, de planches, de madriers, de bois d'équarrissage, de poutres ou de profilés, de particules de bois, de préférence sous forme de farine de bois, de fibres de bois ou de copeaux de bois, ou de produits finaux en bois.

3. Procédé selon la revendication 1 ou 2 **caractérisé en ce que** des acides de type chlorure d'hydrogène, acide phosphorique, acide borique, acide chlorosulfonique et/ou acide *p*-toluènesulfonique sont utilisés comme catalyseurs acides.

4. Procédé selon la revendication 1 ou 2 **caractérisé en ce que** des générateurs d'acide de type anhydrides d'acide carboxylique, chlorures d'acide carboxylique et/ou chlorosilanes sont utilisés comme catalyseurs acides.

5. Procédé selon la revendication 4 **caractérisé en ce que** l'anhydride maléique, l'acétanhydride, l'anhydride phtalique et/ou le dianhydride pyromellitique sont utilisés comme anhydrides d'acide carboxylique et le chlorure de benzoyle, le chlorure d'acryloyle et/ou le chlorure d'acétyle sont utilisés comme chlorures d'acide carboxylique.

6. Procédé selon une ou plusieurs des revendications 1 à 5 **caractérisé en ce que** la réaction avec l'acétate d'isopropényle est conduite en phase liquide à un rapport massique acétate d'isopropényle/bois de 0,5 : 1 à 15 : 1 et une température de réaction de 45 à 95°C.

7. Procédé selon la revendication 6 **caractérisé en ce que** la réaction avec l'acétate d'isopropényle est conduite en phase liquide à des températures de réaction de 85 à 95°C, des temps de séjour de 1,5 à 3 heures, et en utilisant comme catalyseur 0,1 à 0,3 mole d'acide chlorhydrique concentré par litre d'acétate d'isopropényle utilisé, où la réaction est conduite tandis que l'acétone formée est chassée par distillation.

8. Procédé selon une ou plusieurs des revendications 1 à 3 **caractérisé en ce que** la réaction de produits en bois avec l'acétate d'isopropényle est conduite en phase gazeuse à des températures de réaction de 100 à 120°C et des temps de séjour de 0,3 à 3 heures sans pression en utilisant de l'acétate d'isopropényle gazeux et du gaz chlorure d'hydrogène.

9. Procédé selon une ou plusieurs des revendications 1 à 3 **caractérisé en ce que** la réaction de produits en bois avec l'acétate d'isopropényle est conduite en autoclave à des températures de réaction de 90 à 120°C et des temps de séjour de 0,2 à 2 heures à 1,1 à 35 bar en utilisant du chlorure d'hydrogène anhydre comme catalyseur.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- GB 963929 A1
- US 5525721 A
- US 5431868 A
- US 3094431 A

### In der Beschreibung aufgeführte Nicht-Patentliteratur

- **Rowell, R.** The Chemistry of Solid Wood. *Advances in Chemistry Series,* vol. 207, 175